# EUROPÄISCHE PATENTANMELDUNG

(11) **EP 2 444 270 A1**
(43) Veröffentlichungstag der Anmeldung: **25.04.2012**
(21) Anmeldenummer: 11450131.5
(22) Anmeldetag: 12.10.2011
(51) Int. Cl.: B60L 11/18, B62M 6/80

(54) **Anordnung zum Laden der Batterie von Elektrofahrrädern**

(30) Priorität: 21.10.2010 AT 17472010
(71) Anmelder: Schweiger, Martin Karl, 4817 St. Konrad (AT)
(72) Erfinder: Schweiger, Martin Karl, 4817 St. Konrad (AT)
(74) Vertreter: Rippel, Andreas

(57) **Zusammenfassung**

Eine Anordnung zum Laden der Batterie von Elektrofahrrädern und dergleichen einspurigen Elektrofahrzeugen, weist ein stationäres Ladegerät auf, dessen an einem Halter angeordnete Ladekontakte mit Kontaktelementen am Elektrofahrzeug elektrisch zu verbinden sind, wobei die Kontaktelemente (5) mit der Nabe (7) eines Rades (1) des Elektrofahrzeuges verbunden sind.

Die Kontaktelemente (5) sind an einem Schenkel (4) eines etwa L-förmigen Haltestückes angeordnet, dessen anderer Schenkel (3) mit der Nabe (7) des Rades (1) verbindbar ist.

Dadurch wird eine sichere Anordnung geschaffen.

## Beschreibung

Die Erfindung bezieht sich auf eine Anordnung zum Laden der Batterie von Elektrofahrrädern und dergleichen einspurigen Elektrofahrzeugen, mit einem stationären Ladegerät, dessen an einem Halter angeordnete Ladekontakte mit Kontaktelementen am Elektrofahrzeug elektrisch zu verbinden sind, wobei die Kontaktelemente mit der Nabe eines Rades des Elektrofahrzeuges verbunden sind.

Es sind derartige Anordnungen bekannt, bei denen von den Ladekontakten der Positivkontakt auf einer Seite und der Negativkontakt auf der anderen Seite eines ein Rad des Elektrofahrrades in Ruhestellung haltenden Halters angeordnet ist, und die entsprechenden Kontaktelemente je auf einer und der anderen Seite des Rades angeordnet sind, wobei der Abstand der Ladekontakte voneinander dem Abstand der Kontaktelemente entspricht.

In der EP 2 168 848 A1 ist eine derartige Anordnung beschrieben, bei der die Kontaktelemente als Gewindebuchsen ausgebildet sind, die auf die Enden der Radachse aufgeschraubt werden. Die Verbindung der zu der Batterie des Elektrofahrzeuges führenden Kabel mit den Kontaktelementen ist nicht beschrieben und wäre auch schwierig. Sind nämlich die Enden nur mit der Außenfläche der Gewindebuchse verbunden, z.B. verlötet, würde sich das Kabel beim Aufschrauben der Gewindebuchsen auf die Radachse um die Gewindebuchsen aufwickeln.

Die Erfindung hat es sich zum Ziel gesetzt, eine Anordnung der eingangs genannten Art gegenüber der beschriebenen Anordnung zu verbessern.

Erreicht wird dies dadurch, dass die Kontaktelemente an einem Schenkel eines etwa L-förmigen Haltestückes angeordnet sind, dessen anderer Schenkel mit der Nabe des Rades verbindbar ist.

Bei einer erfindungsgemäßen Anordnung wird ein Schenkel des etwa L-förmigen Haltestückes mit der die Nabe bildenden Achse des Rades verbunden, ohne dass hiebei die Verbindungskabel verdreht oder sonstwie beschädigt werden können.

Bei einer bevorzugten Ausführungsform der Erfindung sind die Kontaktelemente als flächiges Metallteil ausgebildet, der an der im Einbauzustand unteren Seite des einen nicht metallischen Schenkels befestigt ist.

Die Befestigung des Metallteiles an dem nicht metallischen Schenkel erfolgt dabei zweckmäßig dadurch, dass der Metallteil mit dem nicht metallischen Schenkel verklebt ist.

Eine problemlose Verbindung des etwa L-förmigen Haltestückes mit der Nabe des Elektrofahrrades wird zweckmäßig dadurch erreicht, dass der mit der Nabe des Rades verbindbare Schenkel mit einer Bohrung zum Durchstecken des mit einem Gewinde versehenen Endes der die Nabe bildenden Achse des Rades versehen ist.

Um das etwa L-förmige Haltestück an einer Verdrehung im befestigten Zustand zu verhindern, greift nach einem weiteren Merkmal der Erfindung der mit der Nabe des Rades verbindbare Schenkel zur Verdrehungssicherung vorzugsweise mit einem Ansatz in eine Öffnung der Radgabel des Elektrofahrzeuges ein.

Nachstehend ist die Erfindung anhand eines in der Zeichnung dargestellten Ausführungsbeispieles näher beschrieben, ohne auf dieses Beispiel beschränkt zu sein. Dabei zeigen:
Fig. 1 eine schematische schaubildliche Ansicht eines Rades eines Elektrofahrrades mit montierten Kontaktelementen;
Fig. 2 das Detail A aus Fig. 1 in größerem Maßstab;
Fig.3 eine schaubildliche Ansicht des L-förmigen Haltestückes mit montierten Kontaktelementen;
Fig. 4 eine schaubildliche Ansicht von hinten eines auf einer Radgabel montierten Haltestückes.

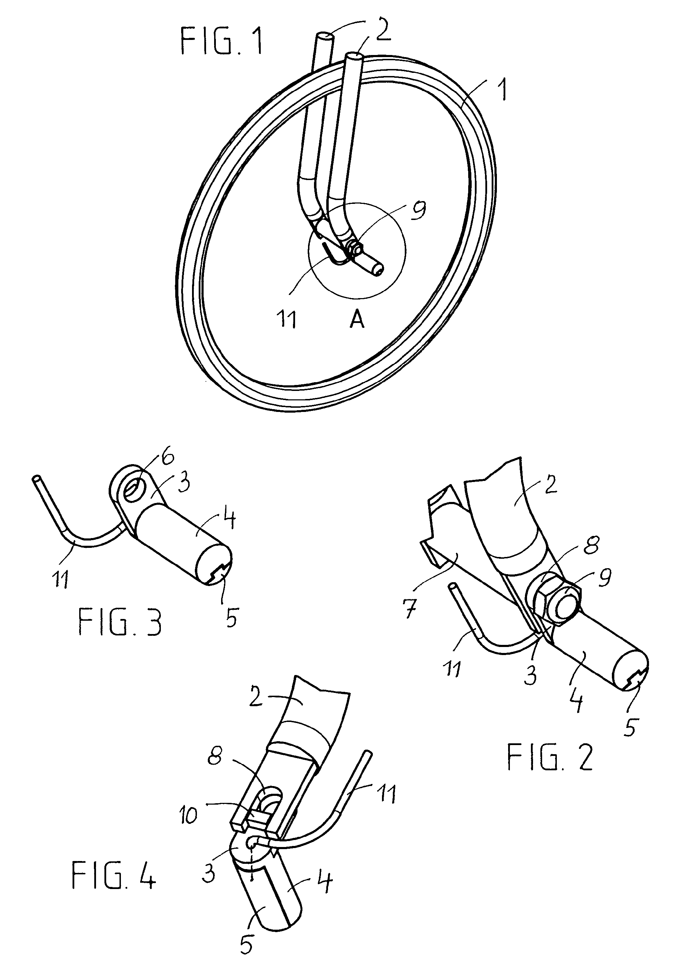

Gemäß Fig. 1 wird das Rad 1 eines Elektrofahrrades an einer Radgabel 2 gelagert. Ein L-förmiges Haltestück weist zwei Schenkel 3 und 4 auf. Mit dem einen Schenkel 4 ist ein Kontaktelement 5 verklebt, das aus einem flächigen Metallteil besteht. Der Schenkel 4 besteht aus einem nicht metallischen Werkstoff, insbesondere aus Kunststoff.

Der andere Schenkel 3 weist eine Bohrung 6 auf, durch die, wie insbesondere aus Fig. 2 ersichtlich ist, das Ende der die Nabe bildenden Achse 7 des Rades 1 durchgesteckt ist. Die Achse 7 wird in üblicher Weise in einem Langloch 8 der Gabel 2 gehalten. Das Ende der Achse 7 ist mit einem Gewinde versehen, auf das eine Mutter 9 aufgeschraubt ist, sodass der Schenkel 3 mit der Achse 7 bzw. der Gabel 2 verschraubt ist.

Der Schenkel 3 besitzt, wie aus Fig. 4 ersichtlich ist, einen Ansatz 10, der in das Langloch 8 der Radgabel 2 eingereift. Dadurch wird eine Verdrehung des L-förmigen Haltestückes 3, 4 verhindert.

Das zur Batterie des Elektrofahrrades führende Kabel 11 ist mit dem Kontaktelement 5 verbunden.

Im Rahmen der Erfindung sind zahlreiche Abänderungen möglich, so kann die Verbindung des Kontaktelementes 5 mit dem Schenkel 4 auch anders als durch Verklebung, z.B. durch Verschraubung erfolgen. Statt eines eigenen Ansatzes 10 könnte der Schenkel 3 direkt in die Öffnung der Radgabel 2 eingreifen.

## Patentansprüche

1. Anordnung zum Laden der Batterie von Elektrofahrrädern und dergleichen einspurigen Elektrofahrzeugen, mit einem stationären Ladegerät, dessen an einem Halter angeordnete Ladekontakte mit Kontaktelementen am Elektrofahrzeug elektrisch zu verbinden sind, wobei die Kontaktelemente (5) mit der Nabe (7) eines Rades (1) des Elektrofahrzeuges verbunden sind, **dadurch gekennzeichnet, dass** die Kontaktelemente (5) an einem Schenkel (4) eines etwa L-förmigen Haltestückes angeordnet sind, dessen anderer Schenkel (3) mit der Nabe (7) des Rades (1) verbindbar ist.

2. Anordnung nach Anspruch 1, **dadurch gekennzeichnet, dass** die Kontaktelemente als flächiges Metallteil (5) ausgebildet sind, der an der im Einbauzustand unteren Seite des einen nicht metallischen Schenkels (4) befestigt ist.

3. Anordnung nach Anspruch 2, **dadurch gekennzeichnet, dass** der Metallteil (5) mit dem nicht metallischen Schenkel (4) verklebt ist.

4. Anordnung nach den Ansprüchen 1 bis 3, **dadurch gekennzeichnet, dass** der mit der Nabe (7) des Rades (1) verbindbare Schenkel (3) mit einer Bohrung (6) zum Durchstecken des mit einem Gewinde versehenen Endes der die Nabe bildenden Achse (7) des Rades (1) versehen ist.

5. Anordnung nach den Ansprüchen 1 bis 4, **dadurch gekennzeichnet, dass** der mit der Nabe (7) des Rades (1) verbindbare Schenkel (3) zur Verdrehungssicherung vorzugsweise mit einem Ansatz (10) in eine Öffnung (8) der Radgabel (2) des Elektrofahrzeuges eingreift.
